(19) Europäisches Patentamt
European Patent Office
Office européen des brevets

(11) Veröffentlichungsnummer : **0 089 618**
**B1**

(12) # EUROPÄISCHE PATENTSCHRIFT

(45) Veröffentlichungstag der Patentschrift : **07.08.85**

(51) Int. Cl.⁴ : **C 07 F 7/04**, C 07 F 7/18, C 08 L 83/04

(21) Anmeldenummer : **83102614.1**

(22) Anmeldetag : **17.03.83**

(54) **Silane und Massen, die unter Verwendung der Silane bereitet worden sind.**

(30) Priorität : **20.03.82 DE 3210337**

(43) Veröffentlichungstag der Anmeldung : **28.09.83 Patentblatt 83/39**

(45) Bekanntmachung des Hinweises auf die Patenterteilung : **07.08.85 Patentblatt 85/32**

(84) Benannte Vertragsstaaten : **AT BE CH DE FR GB IT LI NL SE**

(56) Entgegenhaltungen :
**EP-A- 0 043 501**
**AT-B- 121 578**
**CH-A- 160 684**
**US-A- 3 806 533**
**US-A- 4 257 957**

(73) Patentinhaber : **Consortium für elektrochemische Industrie GmbH**
**Zielstattstrasse 20**
**D-8000 München 70 (DE)**

(72) Erfinder : **Kreuzer, Franz-Heinrich, Dr.**
**Josef-Gerstner-Strasse 14**
**D-8033 Martinsried (DE)**
Erfinder : **Glauberman, Gisela**
**Rottalstrasse 9**
**D-8000 München 80 (DE)**
Erfinder : **Bosch, Erhard, Dr.**
**Brucknerstrasse 43**
**D-8263 Burghausen (DE)**

**EP 0 089 618 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Unter Ausschluß von Wasser lagerfähige, bei Zutritt von Wasser bei Raumtemperatur zu Elastomeren vernetzende Massen, die durch Vermischen von kondensationsfähige Endgruppen aufweisendem Diorganopolysiloxan mit mindestens drei kondensationsfähige Gruppen je Molekül enthaltender Siliciumverbindung sowie gegebenenfalls mindestens einem weiteren Stoff bereitet worden sind, sind bereits bekannt. Hierzu wird auf z. B. US 4 176 112, ausgegeben 27. November 1979, I. A. Cella et al., General Electric Company, verwiesen ; die in dieser Patentschrift beschriebenen Siliciumverbindungen enthalten ebenso wie die Silane der Erfindung mindestens einen über Sauerstoff an Silicium gebundenen organischen Rest mit einer Carbonylgruppe.

Die vorliegende Erfindung hat sich die Aufgabe gestellt, Silane zu finden, die als mindestens drei kondensationsfähige Gruppen je Molekül enthaltende Siliciumverbindungen bei der Bereitung von unter Ausschluß von Wasser lagerfähigen, bei Zutritt von Wasser bei Raumtemperatur zu Elastomeren vernetzenden Massen durch Vermischen von kondensationsfähige Endgruppen aufweisendem Diorganopolysiloxan mit mindestens drei kondensationsfähige Gruppen je Molekül enthaltender Siliciumverbindung sowie gegebenenfalls mindestens einem weiteren Stoff eingesetzt werden können, besonders leicht zugänglich sind und ohne großen Aufwand durch Vermischen (« compoundieren ») mit den übrigen Bestandteilen die gewünschten Massen ergeben. die innerhalb annehmbarer Zeiter vernetzen, ohne bei dieser Vernetzung Stoffe zu bilden, die durch Geruch, Toxizität oder korrodierende Eigenschaften stören. Diese Aufgabe wird durch die Erfindung gelöst.

Gegenstand der Erfindung sind unter Ausschluß von Wasser lagerfähige, bei Zutritt von Wasser bei Raumtemperatur zu Elastomeren vernetzende Massen, die durch Vermischen von kondensationsfähige Endgruppen aufweisendem Diorganopolysiloxan mit mindestens drei kondensationsfähige Gruppen je Molekül enthaltender Siliciumverbindung sowie gegebenenfalls mindestens einem weiteren Stoff bereitet werden, die dadurch gekennzeichnet sind, daß als mindestens ein Teil von mindestens drei kondensationsfähige Gruppen je Moleküle enthaltender Siliciumverbindung ein Silan der allgemeinen Formel

$$R_nSi(OCR_2{}^1COZR)_{4-n},$$

wobei R gleiche oder verschiedene, einwertige, gegebenenfalls substituierte Kohlenwasserstoffreste bedeutet, $R^1$ Wasserstoff ist oder die gleiche Bedeutung wie R hat, Z Sauerstoff oder die Gruppe

$$\overset{|}{\underset{|}{N}}R^1$$

bedeutet, wobei $R^1$ die vorstehend dafür angegebene Bedeutung hat, und n 0 oder 1 ist, oder dessen Oligomer(e) verwendet wird bzw. werden.

Unter den Oligomeren dieser Silane sind solche Verbindungen zu verstehen, die mindestens zwei durch Siloxansauerstoff miteinander verbundene Siliciumatome und mindestens drei $RZOR_2{}^1CO$-Gruppen je Molekül enthalten.

Solche Oligomeren können bei der Herstellung der Silane, die weiter unten beschrieben wird, oder durch Teilhydrolyse der Silane entstehen.

Beispiele für Kohlenwasserstoffreste R und $R^1$ sind lineare oder verzweigte Alkylreste, wie der Methyl-, Ethyl-, N-Propyl-, Isopropyl-, n-Butyl-, sec.-Butyl- und 2-Ethylhexylrest ; Cycloalkylreste, wie der Cyclohexylrest und Methylcyclohexylreste ; lineare oder verzweigte Alkenylreste, wie der Vinyl-, Allyl- und Methallylrest ; Arylreste, wie der Phenylrest ; Alkarylreste, wie Tolylreste ; und Aralkylreste, wie der beta-Phenylethylrest.

Beispiele für substituierte Kohlenwasserstoffreste R und $R^1$ sind halogenierte Kohlenwasserstoffreste, wie der 3,3,3-Trifluorpropylrest, Chlorphenyl- und Bromphenylreste, und Cyanalkylreste, wie der beta-Cyanethylrest.

Die beiden Reste $R^1$, die an den Kohlenstoff gebunden sind, können gleich oder verschieden sein ; die Reste R, die an das Siliciumatom und an Z gebunden sind, können gleich oder verschieden sein ; in einem Molekül können gleiche oder verschiedene $RZOR_2{}^1CO$-Gruppen vorliegen.

Beispiele für erfindungsgemäß verwendete Silane sind solche der Formeln

$$Si(OCH_2COO—n—C_4H_9)_4,$$

$$Si[OCH_2COOCH_2CH(C_2H_5)C_4H_9]_4,$$

$$Si[OCH(CH_3)COO—n—C_4H_9]_4,$$

$$CH_2 = CHSi[OCH_2COOCH_2CH(C_2H_5)C_4H_9]_3.$$

Ein Beispiel für ein Oligomer von erfindungsgemäßen Silan ist die Verbindung der Formel

$$(n—C_4H_9OOCCH_2O)_3SiOSi(OCH_2COO—n—C_4H_9)_3$$

Die Silane der allgemeinen Formel

$$R_nSi(OCR_2{}^1COZR)_{4-n},$$

wobei R, $R^1$ und n jeweils die oben dafür angegebene Bedeutung haben, können dadurch hergestellt werden, daß in aus CH-A-160 684 oder AT-B-121 578 bekannter Weise ein Silan der allgemeinen Formel

$$R_nSiX_{4-n},$$

wobei R und n jeweils die oben dafür angegebene Bedeutung haben und X gleiche oder verschiedene hydrolysierbare Atome oder gleiche oder verschiedene andere kondensierbare Gruppen als $RZOCR_2{}^1CO$-Gruppen bedeutet, mit einem alpha-Hydroxycarbonsäure ester oder -amid umgesetzt wird.

Beispiele für hydrolysierbare Atome X sind Halogenatome, nämlich Fluor, Chlor-, Brom- oder Jodatome, und Wasserstoffatome.

Beispiele für Gruppen X sind Acyloxygruppen, wie Acetoxygruppen, Aminogruppen, bei denen mindestens ein Wasserstoffatom durch eine Kohlenwasserstoffgruppe ersetzt sein kann, Alkoxygruppen, wie Methoxy- oder Ethoxygruppen, Oximgruppen, wie Acetonoximgruppen und Methylethylketoximgruppen, sowie Alkenyloxygruppen, wie Isopropenyl- und Isobutenyloxygruppen.

Wegen der leichten Zugänglichkeit ist als X Chlor bevorzugt. Besonders bevorzugt als Silan, das zur Herstellung der erfindungsgemäßen Silane oder Oligomeren eingesetzt wird, ist Siliciumtetrachlorid.

Es kann nur eine Art von Silanen der allgemeinen Formel $R_nSiX_{4-n}$ eingesetzt werden. Es kann aber auch ein Gemisch aus mindestens zwei verschiedenen Arten solcher Silane eingesetzt werden.

Alpha-Hydroxycarbonsäureester können durch die allgemeine Formel

$$ROOCR_2{}^1COH,$$

alpha-Hydroxycarbonsäureamide können durch die allgemeine Formel

$$RN^1OCR_2{}^1COH$$

wiedergegeben werden, wobei R und $R^1$ jeweils die oben dafür angegebene Bedeutung haben.

Einzelne Beispiele für alpha-Hydroxycarbonsäureester sind Glykolsäure-n-butylester, Glykolsäure-2-ethylhexylester und Milchsäure-n-butylester.

Es kann nur eine Art von alpha-Hydroxycarbonsäureester oder von alpha-Hydroxycarbonsäureamid eingesetzt werden. Es kann aber auch ein Gemisch aus mindestens zwei verschiedenen Arten von alpha-Hydroxycarbonsäureestern oder alpha-Hydroxycarbonsäureamiden oder ein Gemisch aus mindestens einem alpha-Hydroxycarbonsäureester und mindestens einem alpha-Hydroxycarbonsäureamid eingesetzt werden.

Die Umsetzung von Silan der allgemeinen Formel

$$R_nSiX_{4-n}$$

mit alpha-Hydroxycarbonsäureester bzw. alpha-Hydroxycarbonsäureamid zu Silan der allgemeinen Formel

$$R_nSi(OCR_2{}^1COZR)_{4-n}$$

erfolgt nach der Gleichung

$$R_nSiX_{4-n} + 4-n\ HOCR_2{}^1COZR \rightarrow R_nSi(OCR_2{}^1COZR)_{4-n} + 4-n\ XH.$$

Diese Umsetzung kann bei 0° bis 250 °C durchgeführt werden.

Vorzugsweise wird sie bei 15° bis 180 °C durchgeführt. Vorzugsweise herrscht bei dieser Umsetzung der Druck der umgebenden Atmosphäre, also etwa 1 030 mbar. Falls erwünscht, können aber auch höhere oder niedrigere Drücke angewendet werden.

Die Umsetzung kann in einem inerten Lösungsmittel, wie Methylenchlorid, Toluol oder Xylolen, oder einem Gemisch solcher Lösungsmittel durchgeführt werden.

Als kondensationsfähige Endgruppen aufweisende Diorganopolysiloxane können auch bei der Bereitung der erfindungsgemäßen Massen die gleichen kondensationsfähige Endgruppen aufweisenden Diorganopolysiloxane verwendet werden, die bisher zur Herstellung von unter Ausschluß von Wasser lagerfähigen, bei Zutritt von Wasser bei Raumtemperatur zu Elastomeren vernetzenden Massen auf Grundlage von Diorganopolysiloxanen verwendet werden konnten. Die meist dafür verwendeten und auch bei der Herstellung der erfindungsgemäßen Massen bevorzugt eingesetzten kondensationsfähige Endgruppen aufweisenden Diorganopolysiloxane können z. B. durch die allgemeine Formel

$$HO(SiR_2O)_mSiR_2OH$$

wiedergegeben werden. In dieser Formel hat R die oben dafür angegebene Bedeutung und m ist eine ganze Zahl im Wert von mindestens 10.

Innerhalb der bzw. entlang den Siloxanketten der oben angegebenen Formel können, was durch derartige Formeln üblicherweise nicht dargestellt wird, zusätzlich zu den Diorganosiloxaneinheiten ($SiR_2O$) noch andere Siloxaneinheiten vorliegen. Beispiele für solche anderen, meist jedoch lediglich als mehr oder weniger schwer vermeidbare Verunreinigungen vorliegende Siloxaneinheiten sind solche der Formeln $RSiO_{3/2}$, $R_3SiO_{1/2}$ und $SiO_{4/2}$, wobei R jeweils die oben dafür angegebene Bedeutung hat. Vorzugsweise beträgt die Menge an solchen anderen Siloxaneinheiten als Diorganosiloxaneinheiten jedoch insgesamt höchstens 5 Molprozent der in den kondensationsfähige Endgruppen aufweisenden Diorganopolysiloxanen vorliegenden Siloxaneinheiten. Die Hydroxylgruppen in der oben angegebenen Formel können, falls erwünscht, vollständig oder teilweise durch andere kondensationsfähige Gruppen, wie Alkoxygruppen mit 1 bis 4 Kohlenstoffatomen, ersetzt sein.

Die oben im Zusammenhang mit der Beschreibung der erfindungsgemäßen Silane angegebenen Beispiele für R gelten im vollen Umfang auch für die Reste R in der oben angegebenen Formel für in den endständigen Einheiten je eine Si-gebundene Hydroxylgruppe aufweisende Diorganopolysiloxane. Vorzugsweise sind wegen der leichten Zugänglichkeit mindestens 80 % der Anzahl der Reste R Methylreste.

Bei den kondensationsfähige Endgruppen aufweisenden Diorganopolysiloxanen kann es sich um Homo- oder Mischpolymere gleicher oder verschiedener Viskosität handeln. Es kann eine Art von kondensationsfähige Endgruppen aufweisenden Diorganopolysiloxanen bei der Bereitung der erfindungsgemäßen Massen verwendet werden. Es kann aber auch ein Gemisch aus mindestens zwei verschiedenen Arten kondensationsfähige Endgruppen aufweisender Diorganopolysiloxane bei der Bereitung der erfindungsgemäßen Massen eingesetzt werden.

Die Viskosität der kondensationsfähige Endgruppen aufweisenden Diorganopolysiloxane beträgt vorzugsweise 1 500 bis 500 000 mPa.s bei 25 °C.

Vorzugsweise wird das Silan der allgemeinen Formel

$$R_nSi(OCR_2{}^1COZR)_{4-n}$$

oder dessen Oligomer oder ein Gemisch aus derartigem Silan und dessen Oligomer in Mengen von 4 bis 10 Gewichtsteilen je 100 Gewichtsteile kondensationsfähige Endgruppen aufweisendem Diorganopolysiloxan bei der Bereitung der erfindungsgemäßen Massen eingesetzt.

Beispiele für weitere Stoffe, die bei der Bereitung der erfindungsgemäßen Massen eingesetzt werden können, sind Kondensationskatalysatoren, wie Metall- oder Organometallsalze von Carbonsäuren, z. B. Bleidi-2-ethylhexoat, Dibutylzinndiacetat, Dibutylzinndilaurat, Butylzinntris-(2-ethylhexoat), Dibutylzinndiacylate, wobei sich die Acylatgruppen jeweils von einem Gemisch aus 9 bis 11 Kohlenstoffatome je Molekül aufweisenden Carbonsäuren, worin die Carboxylgruppe bei mindestens 90 Gewichtsprozent an ein tertiäres Kohlenstoffatom gebunden ist, ableiten (sogenanntes « Dibutyldiversatat »), Stannodicaproat, Stannodinaphthenat, Stannodioleat, Stannodibutyrat, Titantetranaphthenat, Zinkdinaphthenat, Zinkdistearat, Zinkdi-2-ethylhexoat, Ferro-2-ethylhexoat, Kobalt (II)-2-ethylhexoat und Mangan (II)-ethylhexoat ; andere organische Titanverbindungen, z. B. Tetra-n-butyltitanat, Tetra-2-ethylhexyltitanat, Tetraphenyltitanat, Tetraoctadecyltitanat, Tetraoctylenglykoltitanat, Tetraorganosiloxytitanate, Dialkoxytitan-bisacetylacetonate, Tetraisopropenoxytitan, Tetra-1,2-dimethyl-1-propenoxytitan und Tetra-1-methyl-1-propenoxytitan ; Aluminiumalkoholate, wie Aluminiumtriisopropylat ; Cersalze, z. B. Ceroctoat ; Alkalimetallsalze von Carbonsäuren, z. B. Kaliumacetat, Natriumacetat und Dilithiumoxalat ; Amine, einschließlich Aminoalkylalkoxysilanen, Ammoniumsalze, einschließlich quartären Ammoniumsalzen, z. B. n-Hexylamin, Tris-(2-ethylhexyl)-amin, Di-2-ethylhexylamin, Triisononylamin, gamma-Aminopropyltriethoxysilan, die Verbindung der Formel

$$H_2N(CH_2)_2NH(CH_2)_3Si(OC_2H_5)_3,$$

Dodecylammoniumphosphat und Benzyltriethylammoniumphosphat ; sowie basische flüssige Ionenaustauscher, wie Amberlite LA-2 der Fa. Serva, wobei « Amberlite » ein registriertes Warenzeichen sein dürfte und wobei Amberlite LA-2 ein Gemisch aus sekundären Aminen mit linearen und verzweigten aliphatischen Kohlenwasserstoffresten anstelle von zwei Wasserstoffatomen des Ammoniakmoleküls, welche 11 bis 14 Kohlenstoffatome je Rest aufweisen, ist.

Bevorzugt als Kondensationskatalysatoren sind Amine, einschließlich Aminoalkoxysilane und basische flüssige Ionenaustauscher, ferner quartäre Ammoniumsalze, Alkalimetallsalze von Carbonsäuren, Tetraalkenyloxytitanverbindungen und Cersalze.

Vorzugsweise wird der Kondensationskatalysator in Mengen von 0,01 bis 10 Gewichtsteilen, insbesondere 0,05 bis 4,0 Gewichtsteilen, je 100 Gewichtsteile kondensationsfähige Endgruppen aufweisendem Diorganopolysiloxan bei der Bereitung der erfindungsgemäßen Massen eingesetzt.

Andere Beispiele für weitere Stoffe, die bei der Bereitung der erfindungsgemäßen Massen eingesetzt

werden können, sind Lösungsmittel, die z. B. zum Verdünnen vom Kondensationskatalysator eingesetzt werden, wie Benzol, Toluol, Xylole oder Perchlorethylen, verstärkende anorganische Füllstoffe, nichtverstärkende anorganische Füllstoffe, Pigmente, lösliche Farbstoffe, harzartige Organopolysiloxane, einschließlich solcher aus $(CH_3)_3SiO_{1/2}$- und $SiO_{4/2}$-Einheiten, rein-organische Harze, wie Homo- oder Mischpolymerisate des Acrylnitrils, Polystyrol, Polyvinylchlorid oder Polypropylen, wobei solche reinorganischen Harze, insbesondere Mischpolymerisate aus Styrol und n-Butylacrylat, bereits in Gegenwart vom kondensationsfähige Endgruppen aufweisenden Diorganopolysiloxan durch Polymerisation der genannten Monomeren mittels freier Radikale erzeugt worden sein können, Korrosionsinhibitoren, Oxydationsinhibitoren, Hitzestabilisatoren und antistatisch machende Mittel.

Beispiele für verstärkende anorganische Füllstoffe, also für anorganische Füllstoffe mit einer Oberfläche von mindestens 50 $m^2/g$, sind insbesondere pyrogen erzeugte Siliciumdioxyde, unter Erhaltung der Struktur entwässerte Kieselsäurehydrogele und andere Arten von gefälltem Siliciumdioxyd mit einer Oberfläche von mindestens 50 $m^2/g$.

Beispiele für nicht-verstärkende anorganische Füllstoffe, also für anorganische Füllstoffe mit einer Oberfläche von weniger als 50 $m^2/g$ sind Quarzmehl, Diatomeenerde, Eisenoxid, Zinkoxid, Calciumcarbonat, Magnesiumcarbonat, Zinkcarbonat, Ruß, Glimmer und Neuburger Kreide.

Auch faserige Füllstoffe, wie Asbeste oder Glasfasern, können in den erfindungsgemäßen Massen vorhanden sein.

Enthalten die erfindungsgemäßen Massen anorganische Füllstoffe oder rein-organische Polymere, enthalten sie diese vorzugsweise in Mengen von höchstens 100 Gewichtsprozent, insbesondere von 5 bis 30 Gewichtsprozent, bezogen auf das Gewicht von kondensationsfähige Endgruppen enthaltendem Diorganopolysiloxan.

Wieder andere Beispiele für weitere Stoffe, die bei der Bereitung der erfindungsgemäßen Massen mitverwendet werden können, sind Fungicide, Mittel zur Verbesserung der Wärmeleitfähigkeit, z. B. Bornitrid, Mittel zur Flammfestausrüstung, z. B. Antimontrioxid und chlorierte Paraffine, Mittel zur Verbesserung der Haftung der aus den Massen hergestellten Elastomeren auf den Unterlagen, auf denen die Elastomeren erzeugt wurden, z. B. gamma-Glycidyloxypropyltriethoxysilan, Mittel zur Verlängerung der Hautbildungszeit, wie Silane mit einem SiC-gebundenen Mercaptoalkylrest, Weichmacher, z. B. bei Raumtemperatur flüssige, durch Trimethylsiloxygruppen endblockierte Dimethylpolysiloxane oder Phosphorsäureester, Ultraviolettabsorber und zellenerzeugende Mittel, z. B. Azodicarbonamid.

Zur Bereitung der erfindungsgemäßen Massen können alle Bestandteile der jeweiligen Masse in beliebiger Reihenfolge miteinander vermischt werden. Dieses Vermischen erfolgt vorzugsweise bei Raumtemperatur und vorzugsweise wird bei diesem Vermischen der Zutritt von Wasser vermieden. Falls erwünscht, kann dieses Vermischen aber auch bei höheren Temperaturen erfolgen, z. B. bei einer Temperatur im Bereich von 35 bis 150 °C.

Für die Vernetzung der erfindungsgemäßen Massen reicht der übliche Wassergehalt der Luft aus. Die Vernetzung kann, falls erwünscht, auch bei höheren Temperaturen als Raumtemperatur oder niedrigeren Temperaturen als Raumtemperatur, z. B. bei −5 bis 10 °C, durchgeführt werden. Ebenso kann die Vernetzung auch bei Konzentrationen von Wasser durchgeführt werden, die den normalen Wassergehalt der Luft übersteigen.

Die erfindungsgemäßen Massen eignen sich ausgezeichnet als Abdichtungsmassen für Fugen und ähnliche Leerräume, z. B. bei Gebäuden, Land-, Wasser- und Luftfahrzeugen, oder als Klebstoffe und Verkittungsmassen, z. B. im Fensterbau oder bei der Herstellung von Aquarien oder Vitrinen, sowie z. B. zur Herstellung von Schutzüberzügen, einschließlich solchen für der ständigen Einwirkung von Süßwasser oder Meerwasser ausgesetzte Oberflächen, oder das Gleiten verhindernden Überzügen oder zur Herstellung von Schichtstoffen oder für andere Anwendungen, bei denen die bisher bekannten, bei Raumtemperatur zu Elastomeren härtenden Massen eingesetzt werden konnten, wie die Isolierung von elektrischen oder elektronischen Vorrichtungen oder die Herstellung von gummielastischen Formkörpern.

## Beispiel 1

In einem Vierhalskolben, der mit Rührer, Tropftrichter, Gaseinleitungsrohr und Rückflußkühler ausgestattet ist, werden unter Rühren zu 680 g Siliciumtetrachlorid innerhalb von einer Stunde 2 114 g Glykolsäure-n-butylester tropfenweise gegeben. Nach 15 Minuten wird der Inhalt des Kolbens auf 100 °C erwärmt und mit einem Stickstoffstrom, der durch die Flüssigkeit in den Kolben geleitet wird, diese Flüssigkeit von Chlorwasserstoff befreit.

Es werden 2 155 g einer schwach gelblichen Flüssigkeit erhalten, die im wesentlichen aus dem Silan der Formel

$$Si(OCH_2COO—n—C_4H_9)_4$$

besteht.

## Beispiel 2

Die im Beispiel 1 beschriebene Arbeitsweise wird wiederholt mit den Abänderungen, daß die Umsetzung nicht bei Raumtemperatur, sondern bei 40 °C und in 2,5 l Methylenchlorid durchgeführt wird. Nach dem Abdestillieren des Methylenchlorids wird eine kristalline Substanz vom Fp. 30 °C erhalten. Ein Vergleich des NMR-Spektrums dieser Substanz mit dem NMR-Spektrum der nach Beispiel 1 erhaltenen Flüssigkeit zeigt, daß die kristalline Substanz weniger Verunreinigungen enthält.

## Beispiel 3

In dem Vierhalskolben, der mit Rührer, Tropftrichter, Gaseinleitungsrohr und Rückflußkühler ausgestattet ist, werden unter Rühren zu 680 g Siliciumtetrachlorid in 2,5 l Toluol 700 g eines Gemisches aus 1 902 g Glykolsäure-n-butylester und 212 g Glykolsäure-2-ethylhexylester bei 20 °C tropfenweise gegeben. Danach wird der Inhalt des Kolbens auf 110 °C erwärmt und unter weiterem Rühren der Rest des Gemisches aus Glykolsäureestern tropfenweise in den Kolben gegeben. Nachdem mit einem Stickstoffstrom, der bei 110 °C durch die Flüssigkeit in den Kolben geleitet wird, diese Flüssigkeit vom Chlorwasserstoff befreit und das Methylenchlorid abdestilliert ist, liegt eine Flüssigkeit vor, die im wesentlichen aus dem entsprechenden Silan besteht und die hinsichtlich ihrer Reinheit mit der gemäß Beispiel 2 erhaltenen kristallinen Substanz vergleichbar ist.

## Beispiel 4

Die in Beispiel 1 beschriebene Arbeitsweise wird wiederholt mit der Abänderung, daß anstelle der 2 114 g Glykolsäure-n-butylester die gleiche molare Menge Glykolsäure-2-ethylhexylester verwendet wird. Es wird eine Flüssigkeit erhalten, die im wesentlichen aus dem Silan der Formel

$$Si[OCH_2COOCH_2CH(C_2H_5)C_4H_9]_4$$

besteht.

## Beispiel 5

Die in Beispiel 4 angegebene Arbeitsweise wird wiederholt mit der Abänderung, daß anstelle der 680 g Siliciumtetrachlorid die gleiche molare Menge Vinyltrichlorsilan verwendet wird.

Es wird eine Flüssigkeit erhalten, die im wesentlichen aus dem Silan der Formel

$$CH_2 = CHSi[OCH_2COOCH_2CH(C_2H_5)C_4H_9]_3$$

besteht.

## Beispiel 6

Die in Beispiel 1 beschriebene Arbeitsweise wird wiederholt mit der Abänderung, daß anstelle der 2 114 g Glykolsäure-n-butylester die gleiche molare Menge Milchsäure-n-butylester verwendet wird. Es wird eine Flüssigkeit erhalten, die im wesentlichen aus dem Silan der Formel

$$Si[OCH(CH_3)COO—n—C_4H_9]_4$$

besteht.

## Beispiel 7

95 g in den endständigen Einheiten je eine Si-gebundene Hydroxylgruppe aufweisendes Dimethylpolysiloxan mit einer Viskosität von 20 000 mPa.s bei 25 °C werden mit 5 g der gemäß Beispiel 1 hergestellten Flüssigkeit und 0,1 g basischem flüssigem Ionenaustauscher (Amberlite LA-2 der Fa. Serva) vermischt. Die so erhaltene, unter Ausschluß von Wasser lagerfähige, bei Zutritt von Wasser bei Raumtemperatur zu einem Elastomeren vernetzende Masse hat unmittelbar nach ihrer Bereitung und nach 30 Tagen Lagerung unter Ausschluß von Wasser bei Zutritt des in der Luft enthaltenen Wassers eine Hautbildungszeit von 5 bis 10 Minuten, gleichgültig, ob die Lagerung bei Raumtemperatur oder bei 80 °C erfolgte.

## Beispiel 8

83 g in den endständigen Einheiten je eine Si-gebundene Hydroxylgruppe aufweisendes Dimethylpolysiloxan mit einer Viskosität von 80 000 mPa.s bei 25 °C werden mit 7 g pyrogen erzeugtem Siliciumdioxyd mit einer Oberfläche von etwa 300 $m^2/g$, 10 g der gemäß Beispiel 4 hergestellten Flüssigkeit und 0,1 g basischem flüssigem Ionenaustauscher (Amberlite LA-2) vermischt. Die so erhaltene, unter Ausschluß von Wasser lagerfähige, bei Zutritt von Wasser zu einem Elastomeren vernetzende Masse ist standfest, d. h. sie läuft von senkrechten oder gegenüber der waagerechten geneigten Flächen vor der Vernetzung nicht ab, und hat unmittelbar nach ihrer Bereitung und nach 30 Tagen Lagerung unter Ausschluß von Wasser bei Zutritt des in der Luft enthaltenen Wassers eine Hautbildungszeit von 5 Minuten, gleichgültig, ob die Lagerung bei Raumtemperatur oder 80 °C erfolgte.

Beispiel 9

Die in Beispiel 7 beschriebene Arbeitsweise wird wiederholt mit der Abänderung, daß anstelle der 5 g der gemäß Beispiel 1 hergestellten Flüssigkeit 5 g der gemäß Beispiel 5 hergestellten Flüssigkeit verwendet werden. Die so erhaltene, unter Ausschluß von Wasser lagerfähige, bei Zutritt von Wasser zu einem Elastomeren vernetzende Masse hat unmittelbar nach ihrer Bereitung und nach 30 Tagen Lagerung unter Ausschluß von Wasser bei Zutritt des in der Luft enthaltenen Wassers eine Hautbildungszeit von 25 bis 30 Minuten, gleichgültig, ob die Lagerung bei Raumtemperatur oder 80 °C erfolgte.

Beispiel 10

Die in Beispiel 7 beschriebene Arbeitsweise wird wiederholt mit der Abänderung, daß anstelle der 5 g der gemäß Beispiel 1 hergestellten Flüssigkeit 5 g der gemäß Beispiel 6 hergestellten Flüssigkeit verwendet werden. Die so erhaltene, unter Ausschluß von Wasser lagerfähige, bei Zutritt von Wasser zu einem Elastomeren vernetzende Masse hat unmittelbar nach ihrer Bereitung und nach 48 Tagen Lagerung unter Ausschluß von Wasser bei Zutritt des in der Luft enthaltenen Wassers eine Hautbildungszeit von 10 bis 15 Minuten, gleichgültig, ob die Lagerung bei Raumtemperatur oder 80 °C erfolgte.

**Patentansprüche** (für die Vertragsstaaten BE, CH, DE, FR, GB, IT, LI, NL, SE)

1. Unter Ausschluß von Wasser lagerfähige, bei Zutritt von Wasser bei Raumtemperatur zu Elastomeren vernetzende Massen, die durch Vermischen von kondensationsfähige Endgruppen aufweisendem Diorganopolysiloxan mit mindestens drei kondensationsfähige Gruppe je Molekül enthaltender Siliciumverbindung sowie gegebenenfalls mindestens einem weiteren Stoff bereitet werden, dadurch gekennzeichnet, daß als mindestens ein Teil von mindestens drei kondensationsfähige Gruppen je Molekül enthaltender Siliciumverbindung ein Silan der allgemeinen Formel

$$R_nSi(OCR_2^1COZR)_{4-n},$$

wobei R gleiche oder verschiedene, einwertige, gegebenenfalls substituierte Kohlenwasserstoffreste bedeutet, $R^1$ Wasserstoff ist oder die gleiche Bedeutung wie R hat, Z Sauerstoff oder die Gruppe $\overset{|}{N}R^1$ bedeutet, wobei $R^1$ die vorstehend dafür angegebene Bedeutung hat, und n 0 oder 1 ist, oder dessen Oligomer(e) verwendet wird bzw. werden.

2. Silan der Formel

$$Si(OCH_2COO—n—C_4H_9)_4.$$

3. Silan der Formel

$$Si[OCH_2COOCH_2CH(C_2H_5)C_4H_9]_4.$$

4. Silan der Formel

$$Si[OCH(CH_3)COO—n—C_4H_9]_4.$$

5. Silan der Formel

$$CH_2 = CHSi[OCH_2COOCH_2CH(C_2H_5)C_4H_9]_3.$$

**Patentanspruch** (für den Vertragsstaat AT)

Unter Ausschluß von Wasser lagerfähige, bei Zutritt von Wasser bei Raumtemperatur zu Elastomeren vernetzende Massen, die durch Vermischen von kondensationsfähige Endgruppen aufweisendem Diorganopolysiloxan mit mindestens drei kondensationsfähige Gruppen je Molekül enthaltender Siliciumverbindung sowie gegebenenfalls mindestens einem weiteren Stoff bereitet werden, dadurch

gekennzeichnet, daß als mindestens ein Teil von mindestens drei kondensationsfähige Gruppen je Molekül enthaltender Siliciumverbindung ein Silan der allgemeinen Formel

$$R_nSi(OCR_2{}^1COZR)_{4-n},$$

wobei R gleiche oder verschiedene, einwertige, gegebenenfalls substituierte Kohlenwasserstoffreste bedeutet, R[1] Wasserstoff ist oder die gleiche Bedeutung wie R hat, Z Sauerstoff oder die Gruppe $\overset{|}{\underset{|}{N}}R^1$ bedeutet, wobei R[1] die vorstehend dafür angegebene Bedeutung hat, und n 0 oder 1 ist, oder dessen Oligomer(e) verwendet wird bzw. werden.

**Claims** (for the Contracting States : BE, CH, DE, FR, GB, IT, LI, NL, SE)

1. Compositions that can be stored in the absence of water and crosslink at room temperature in the presence of water to form elastomers and that have been prepared by mixing a diorganopolysiloxane having condensable terminal groups with a silicon compound containing at least three condensable groups per molecule and optionally with at least one further substance, characterised in that a silane of the general formula

$$R_nSi(OCR_2{}^1COZR)_{4-n},$$

in which R represents the same or different monovalent optionally substituted hydrocarbon radicals, R[1] represents hydrogen or has the same meaning as R, Z represents oxygen or the group $\overset{|}{\underset{|}{N}}R^1$, in which R[1] has the meaning given above, and n represents 0 or 1, or its oligomer(s) is/are used as at least part of the silicon compound containing at least three condensable groups per molecule.

2. Silane of the formula

$$Si(OCH_2COO—n—C_4H_9)_4.$$

3. Silane of the formula

$$Si[OCH_2COOCH_2CH(C_2H_5)C_4H_9]_4.$$

4. Silane of the formula

$$Si[OCH(CH_3)COO—n—C_4H_9]_4.$$

5. Silane of the formula

$$CH_2 = CHSi[OCH_2COOCH_2CH(C_2H_5)C_4H_9]_3.$$

**Claim** (for the Contracting State AT)

Compositions that can be stored in the absence of water and crosslink at room temperature in the presence of water to form elastomers and that have been prepared by mixing a diorganopolysiloxane having condensable terminal groups with a silicon compound containing at least three condensable groups per molecule and optionally with at least one further substance, characterised in that a silane of the general formula

$$R_nSi(OCR_2{}^1COZR)_{4-n},$$

in which R represents the same or different monovalent optionally substituted hydrocarbon radicals, $R_1$ represents hydrogen or has the same meaning as R, Z represents oxygen or the group $\overset{|}{\underset{|}{N}}R^1$, in which R[1] has the meaning given above, and n represents 0 or 1, or its oligomer(s) is/are used as at least part of the silicon compound containing at least three condensable groups per molecule.

**Revendications** (pour les Etats contractants : BE, CH, DE, FR, GB, IT, LI, NL, SE)

1. Matières qui se conservent bien à l'abri de l'eau, qui, en présence d'eau, à la température ambiante, se transforment en élastomères par réticulation, et qui sont préparées par mélangeage d'un poly-diorganosiloxane contenant des radicaux terminaux condensables, d'un composé du silicium contenant au moins 3 radicaux condensables par molécule et, éventuellement, d'au moins un corps

supplémentaire, matières caractérisées en ce qu'elles comportent, en tant qu'au moins une partie d'un composé du silicium contenant au moins 3 radicaux condensables par molécule, un silane répondant à la formule générale

$$R_nSi(OCR_2{}^1COZR)_{4-n},$$

dans laquelle les R représentent chacun, indépendamment les uns des autres, un radical hydrocarboné univalent, éventuellement substitué, $R^1$ représente l'hydrogène ou a la même signification que R, Z représente l'oxygène ou un radical $\overset{|}{\underset{|}{N}}R^1$ dont le symbole $R^1$ a la signification qui lui a été donnée ci-dessus et n est égal à 0 ou à 1, ou à un ou des oligomères d'un tel silane.

2. Silane de formule

$$Si(OCH_2COO—n—C_4H_9)_4.$$

3. Silane de formule

$$Si[OCH_2COOCH_2CH(C_2H_5)C_4H_9]_4.$$

4. Silane de formule

$$Si[OCH(CH_3)COO—n—C_4H_9]_4.$$

5. Silane de formule

$$CH_2 = CHSi[OCH_2COOCH_2CH(C_2H_5)C_4H_9]_3.$$

**Revendication** (pour l'Etat contractant AT)

Matières qui se conservent bien à l'abri de l'eau, qui, en présence d'eau, à la température ambiante, se transforment en élastomères par réticulation, et qui sont préparées par mélangeage d'un polydiorganosiloxane contenant des radicaux terminaux condensables, d'un composé du silicium contenant au moins 3 radicaux condensables par molécule et, éventuellement, d'au moins un corps supplémentaire matières caractérisées en ce qu'elles comportent, en tant qu'au moins une partie d'un composé du silicium contenant au moins 3 radicaux condensables par molécule, un silane répondant à la formule générale

$$R_nSi(OCR_2{}^1COZR)_{4-n},$$

dans laquelle les R représentent chacun, indépendamment les uns des autres, un radical hydrocarboné univalent, éventuellement substitué, $R^1$ représente l'hydrogène ou a la même signification que R, Z représente l'oxygène ou un radical $\overset{|}{\underset{|}{N}}R^1$ dont le symbole $R^1$ a la signification qui lui a été donnée ci-dessus et n est égal à 0 ou à 1, ou à un des oligomères d'un tel silane.